# FASCICULE DE BREVET EUROPEEN

(11) **EP 2 516 220 B1**
(45) Date de publication et mention de la délivrance du brevet: **30.03.2016**
(21) Numéro de dépôt: 10801656.9
(22) Date de dépôt: 13.12.2010
(51) Int. Cl.: H01M 2/10, B60L 11/18, B60K 1/04

(54) **PROCEDE ET SYSTEME DE MONTAGE OU DEMONTAGE D'UNE BATTERIE D'UN VEHICULE AUTOMOBILE**
VERFAHREN UND SYSTEM ZUR MONTAGE ODER ENTFERNUNG EINER KRAFTFAHRZEUGBATTERIE
METHOD AND SYSTEM FOR MOUNTING OR REMOVING A MOTOR VEHICLE BATTERY

(30) Priorité: 21.12.2009 FR 0959270
(43) Date de publication de la demande: 31.10.2012
(73) Titulaire: Renault S.A.S., 92100 Boulogne-Billancourt (FR)
(72) Inventeur: ESCANDE, Bruno, F-78790 Septeuil (FR)
(86) Numéro de dépôt international: PCT/FR2010/052678
(87) Numéro de publication internationale: WO 2011/083229

(56) Documents cités:
- WO-A1-2008/128991
- GB-A- 515 707
- JP-A- H09 188 143
- JP-Y2- S53 700
- US-A1- 2007 108 877
- US-A1- 2009 074 539
- US-B1- 6 170 304

## Description

La présente invention se rapporte à un procédé de montage ou démontage, par exemple en vue de sa recharge et/ou de son remplacement, d'un conteneur d'énergie d'alimentation d'un moteur d'entraînement d'un véhicule automobile. Elle porte aussi sur un système de montage ou démontage et une station d'échange de conteneur d'énergie mettant en oeuvre un tel procédé.

Certains véhicules automobiles, comme les véhicules électriques ou hybrides, comprennent un conteneur d'énergie d'alimentation d'un moteur d'entraînement, comme une batterie électrique d'alimentation d'un moteur électrique. Il peut se révéler intéressant d'échanger ce conteneur lorsque son niveau d'énergie est faible contre un nouveau conteneur rempli d'énergie. Ceci peut être fait dans une station similaire à une station service dans laquelle on peut remplir un réservoir d'essence d'un véhicule automobile.

On connaît du document US 5 612 606 une station d'échange de batterie électrique d'alimentation d'un moteur d'entraînement d'un véhicule électrique et un procédé pour réaliser un tel échange. Dans la station d'échange décrite, le conducteur positionne approximativement le véhicule dans un rail, contre une butée longitudinale par rapport aux équipements de la station. Par la suite, dans des phases plus ou moins automatiques, des moyens mobiles de dépose de la batterie électrique et d'assemblage de la nouvelle batterie au véhicule viennent se positionner relativement au véhicule grâce à des capteurs. La quantité de capteurs et moyens électroniques nécessaires au fonctionnement d'une telle station la rend difficilement fiable et implique que son fonctionnement est peu robuste.

Le document JPS53700Y2 divulgue un procédé d'échange d'une batterie. Le procédé présente notamment l'inconvénient d'user le verrou de la batterie après un grand nombre d'échange.

Pour un déploiement aisé des stations d'échange de conteneur d'énergie (nécessitant peu de compétence technologique), il est nécessaire de proposer un système d'échange de conteneur d'énergie fiable et robuste, et donc un procédé de montage ou démontage de conteneur d'énergie performant.

Ainsi, le but de l'invention est de fournir une solution de montage ou démontage d'un conteneur d'énergie remédiant aux inconvénients mentionnés précédemment et améliorant les procédés de remplacement connus de l'art antérieur.

En particulier, l'invention propose un procédé de montage ou démontage de conteneur d'énergie simple, fiable et automatisé.

A cet effet, l'invention repose sur un procédé de montage ou démontage d'un conteneur d'énergie d'alimentation d'un moteur d'entraînement d'un véhicule automobile, fixé sur le véhicule automobile à l'aide d'un verrou sur lequel agit un piston, selon la revendication 1. :

La seconde étape (E2) peut consister en une rotation inférieure ou égale à un demi-tour du verrou.

La seconde étape (E2) peut être obtenue par l'association d'un moyen de liaison d'un outil avec un moyen de liaison d'une extrémité du verrou.

Le procédé peut comprendre une étape préalable (E0) de fixation d'un outil de mise en oeuvre du procédé sur au moins un élément correspondant de la caisse du véhicule, de la batterie ou du verrou.

L'étape préalable (E0) peut comprendre la liaison de l'outil par l'intermédiaire d'au moins deux éléments de liaison, répartis symétriquement autour d'un moyen de liaison du verrou.

L'étape préalable (E0) peut comprendre l'insertion d'un élément en forme de champignon dans une lumière correspondante.

Les étapes d'actionnement du verrou peuvent être mises en oeuvre automatiquement à l'aide d'un outil motorisé.

L'invention porte aussi sur un procédé de remplacement d'un conteneur d'énergie d'alimentation d'un moteur d'entraînement d'un véhicule automobile, caractérisé en ce qu'il comprend un procédé de montage ou démontage du conteneur d'énergie d'alimentation tel que décrit précédemment.

L'invention porte aussi sur un système de montage ou démontage d'un conteneur d'énergie d'alimentation d'un moteur d'entraînement d'un véhicule automobile, caractérisé en ce qu'il comprend des moyens matériels et/ou logiciels de mise en oeuvre du procédé de montage ou démontage tel que décrit précédemment.

L'invention porte aussi sur une station de montage ou démontage d'un conteneur d'énergie d'alimentation d'un moteur d'entraînement d'un véhicule automobile, caractérisé en ce qu'il comprend un système de montage ou démontage tel que décrit ci-dessus.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 est une vue en coupe d'une batterie dotée d'un dispositif de verrouillage apte à la mise en oeuvre du procédé de montage ou démontage de batterie selon le mode d'exécution de l'invention.
La figure 2 est une vue en perspective de dessus d'un outil apte à la mise en oeuvre du procédé de montage ou démontage de batterie selon le mode d'exécution de l'invention.
La figure 3 est une vue en perspective de dessus d'un détail de la coopération entre la batterie et l'outil apte à la mise en oeuvre du procédé de montage ou démontage de batterie selon le mode d'exécution de l'invention.

L'invention s'applique à tout véhicule comprenant un conteneur d'énergie d'alimentation positionné dans le coffre arrière ou sous le châssis. Dans la suite de la description, on décrit le démontage d'un conteneur d'énergie au travers de la description du démontage d'une batterie d'alimentation électrique d'un moteur d'entraînement d'un véhicule. L'invention s'applique toutefois à tout type de conteneur d'alimentation et s'applique également au montage d'une batterie d'alimentation, à partir des étapes décrites ci-dessous réalisées à l'inverse.

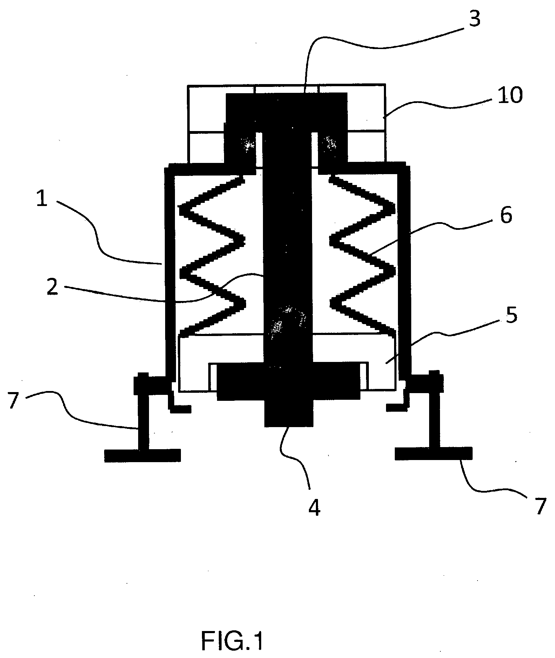

Le procédé de démontage d'une batterie d'alimentation électrique d'un véhicule automobile selon l'invention est lié au principe de fixation d'une telle batterie, illustrée sur la figure 1 à titre d'exemple. Une batterie 1 est verrouillée par un verrou 2 qui comprend une première extrémité 3, coopérant avec la caisse 10 d'un véhicule automobile qui forme une serrure pour mettre en oeuvre la fonction de verrouillage de la batterie, et une seconde extrémité 4, comprenant un moyen de liaison destiné à l'actionnement du verrou 2. Le verrou 2 est monté mobile en rotation sur la batterie, en vue de la mise en oeuvre de sa fonction de verrouillage ou déverrouillage. La batterie comprend de plus un piston 5 agissant sur le verrou 2 par un élément élastique 6, comme un ressort, afin de maintenir le verrou 2 en position verrouillée de manière sécurisée.

Plus généralement, le procédé de démontage de la batterie, qui va être décrit ci-après, est adapté à tout principe de fixation de batterie du type précédent, combinant un verrou tournant associé à un dispositif de mise en contrainte du verrou.

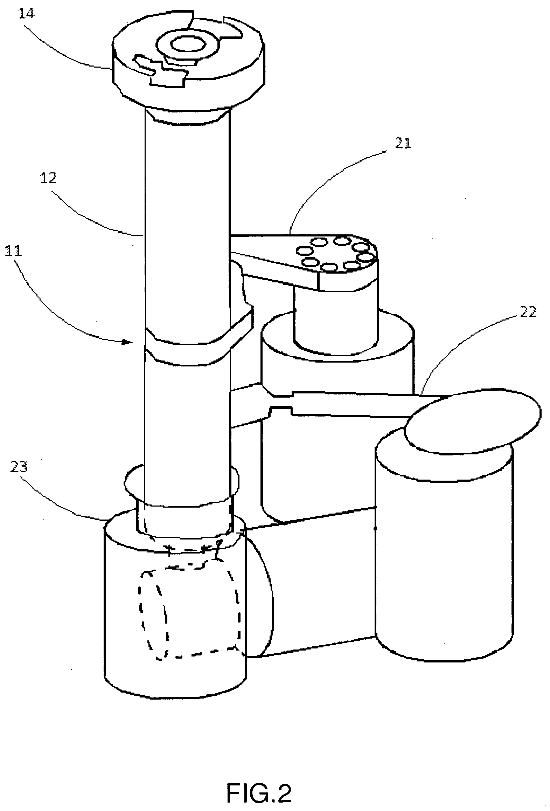

Le procédé de démontage de la batterie 1 est mis en oeuvre à l'aide d'un outil 11, par exemple tel que représenté en figure 2, qui sera décrit ultérieurement. Il comprend les deux étapes essentielles suivantes, mises en oeuvre de manière automatique par l'outil 11 :
E1 : action sur le piston 5 pour obtenir un déplacement relatif du piston 5 par rapport au verrou 2, afin de débrayer ce dernier ;
E2 : rotation du verrou 2 de sorte de laisser passer le verrou hors de la serrure et de le déverrouiller.

La première étape E1 peut simplement consister à pousser le piston 5 pour le déplacer en translation, contre l'effort du moyen élastique 6. La seconde étape E2 peut consister en une rotation d'un quart de tour du verrou, voire une rotation inférieure ou égale à un demi-tour.

Le procédé peut comprendre une étape préalable E0 de fixation de l'outil 11 sur des éléments correspondants 7 au niveau de la caisse du véhicule, de la batterie ou plus précisément du verrou, afin d'assurer son bon positionnement par rapport à la batterie 1 et notamment son système de verrouillage avant la mise en oeuvre du procédé de démontage décrit précédemment de manière fiable et performante.

Les éléments de fixation 7 de l'outil 11 peuvent se présenter sous forme de champignons, qui seront de préférence disposés de sorte d'être accessibles, de forme facile à nettoyer, résistants aux fortes contraintes subies et peu encombrants. Avantageusement, deux champignons sont répartis symétriquement autour du verrou, afin d'obtenir un maintien stable de l'outil. En variante, tout autre nombre de champignons et toute forme d'éléments de fixation 7 sont acceptables sans sortir du concept de l'invention.

La fixation de l'outil sur les champignons peut être obtenue selon deux types de mouvement : soit par une translation, soit par une rotation dans le plan des champignons.

Enfin, le procédé de démontage comprend une dernière étape E4 de retrait de la batterie déverrouillée. Pour cela, l'outil 11 peut simplement être rappelé en translation pour obtenir son retrait et simultanément celui de la batterie.

La mise en oeuvre de ces étapes du procédé de démontage de la batterie est donc obtenue par des mouvements d'un outil 11, qui peuvent être effectués de différentes manières, par des actionneurs indépendants, de type électrique, hydraulique, par une cinématique à came, etc. La figure 2 illustre un mode de réalisation d'un outil 11 permettant la mise en oeuvre automatique du procédé de démontage d'une batterie selon l'invention.

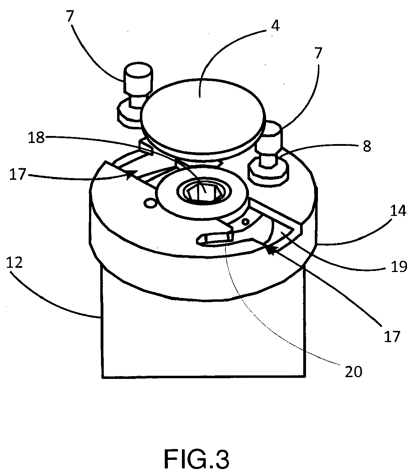

L'outil 11 comprend une extrémité supérieure 14 montée sur une tige verticale cylindrique 12 destinée à coopérer avec la partie de liaison du verrou 2. Cette coopération est plus précisément illustrée sur la figure 3, dans une phase d'approche de l'outil 11 du verrou 2, dont seule la partie inférieure de liaison 4 et les deux éléments de liaison latéraux 7 en forme de champignons de fixation sont représentés. L'extrémité 14 de l'outil 11 comprend deux lumières 17 disposés symétriquement autour d'un élément de liaison 18, qui se présente sous la forme d'une mortaise apte à recevoir une tige correspondante de type méplat, non représentée, disposée sous la surface de l'élément de liaison 4 du verrou 2. Chaque lumière présente une partie sensiblement circulaire 19, de taille importante correspondant à un champignon 7 de sorte de pouvoir insérer un tel champignon par cette partie circulaire 19. Ensuite, chaque lumière 17 comprend une partie plus étroite 20, formant une portion d'arc de cercle, au sein de laquelle peut se déplacer la partie plus étroite 8 d'un champignon après son insertion dans l'ouverture 19. Ainsi, lors de l'étape E0 de fixation de l'outil 11, les ouvertures 19 sont approchées des champignons 7 jusqu'à l'insertion de ces derniers au sein de ces ouvertures, avant une rotation de l'axe 12 assurant la fixation verrouillée de l'outil 11 par les champignons 7. En variante, cette fixation pourrait être obtenue par une autre géométrie et/ou d'autres mouvements, comme une translation. Ensuite, la partie centrale de l'axe 12 se déplace en translation verticale pour venir en appui sur le piston 5 et débrayer le verrou, selon l'étape E1. Enfin, la rotation de l'élément de liaison 18 entraîne le verrou en rotation pour le déverrouiller, selon l'étape E2.

Pour obtenir ces différents mouvements, l'outil 11 possède trois moteurs indépendants, par exemple, électriques ou pneumatiques ou hydrauliques, une biellette supérieure 21 qui permet la fixation de l'outil sur les champignons, une biellette inférieure 22 qui permet la rotation de la partie centrale de l'axe 12 pour déverrouiller le verrou, et un dispositif 23 de mise en translation de l'axe 12. En remarque, ces deux mouvements peuvent être couplés.

## Revendications

1. Procédé de montage ou démontage d'un conteneur d'énergie d'alimentation d'un moteur d'entraînement d'un véhicule automobile, fixé sur le véhicule automobile à l'aide d'un verrou (2) sur lequel agit un piston (5), **caractérisé en ce qu**'il comprend les étapes suivantes :
(E1) : débrayage du verrou (2) par action de poussée sur le piston (5) à l'encontre d'un moyen élastique (6) pour obtenir le déplacement dudit piston en translation par rapport au verrou ;
(E2) : rotation du verrou (2) autour de l'axe de déplacement en translation du piston, de sorte de le verrouiller ou déverrouiller et de verrouiller ou déverrouiller le conteneur d'énergie.

2. Procédé de montage ou démontage d'un conteneur d'énergie d'alimentation selon la revendication 1, **caractérisé en ce que** la seconde étape (E2) consiste en une rotation inférieure ou égale à un demi-tour du verrou (2).

3. Procédé de montage ou démontage d'un conteneur d'énergie d'alimentation selon la revendication précédente, **caractérisé en ce que** la seconde étape (E2) est obtenue par l'association d'un moyen de liaison (18) d'un outil (11) avec un moyen de liaison d'une extrémité (4) du verrou (2).

4. Procédé de montage ou démontage d'un conteneur d'énergie d'alimentation selon l'une des revendications précédentes, **caractérisé en ce qu**'il comprend une étape préalable (E0) de fixation d'un outil (11) de mise en oeuvre du procédé sur au moins un élément correspondant (7) de la caisse du véhicule, de la batterie (1) ou du verrou (2).

5. Procédé de montage ou démontage d'un conteneur d'énergie d'alimentation selon la revendication précédente, **caractérisé en ce que** l'étape préalable (E0) comprend la liaison de l'outil (11) par l'intermédiaire d'au moins deux éléments de liaison (7), répartis symétriquement autour d'un moyen de liaison (4) du verrou (2).

6. Procédé de montage ou démontage d'un conteneur d'énergie d'alimentation selon l'une des revendications 4 ou 5, **caractérisé en ce que** l'étape préalable (E0) comprend l'insertion d'un élément en forme de champignon dans une lumière correspondante (17).

7. Procédé de montage ou démontage d'un conteneur d'énergie d'alimentation selon l'une des revendications précédentes, **caractérisé en ce que** les étapes d'actionnement du verrou (2) sont mises en oeuvre automatiquement à l'aide d'un outil (11) motorisé.

8. Procédé de remplacement d'un conteneur d'énergie d'alimentation d'un moteur d'entraînement d'un véhicule automobile, **caractérisé en ce qu**'il comprend un procédé de montage ou démontage du conteneur d'énergie d'alimentation selon l'une des revendications précédentes.

9. Système de montage ou démontage d'un conteneur d'énergie d'alimentation d'un moteur d'entraînement d'un véhicule automobile, **caractérisé en ce qu**'il comprend des moyens matériels et/ou logiciels de mise en oeuvre du procédé de montage ou démontage selon l'une des revendications 1 à 7.

10. Station de montage ou démontage d'un conteneur d'énergie d'alimentation d'un moteur d'entraînement d'un véhicule automobile, **caractérisé en ce qu**'il comprend un système de montage ou démontage selon la revendication précédente.

## Patentansprüche

1. Verfahren zur Montage oder Entfernung eines Energieversorgungsblocks eines Motors für den Antrieb eines Kraftfahrzeugs, der auf dem Kraftfahrzeug mit Hilfe eines Riegels (2), auf den ein Kolben (5) einwirkt, befestigt ist, **dadurch gekennzeichnet, dass** es die folgenden Schritte umfasst:
(E1): Entkuppeln des Riegels (2) durch Schubausübung auf den Kolben (5) gegen ein elastisches Mittel (6), um die Verschiebung des Kolbens in Translation in Bezug zum Riegel zu erhalten;
(E2): Drehen des Riegels (2) um die Translationsverschiebeachse des Kolbens, so dass er verriegelt oder entriegelt und der Energieblock verriegelt oder entriegelt wird.

2. Verfahren zur Montage oder Entfernung eines Energieversorgungsblocks nach Anspruch 1, **dadurch gekennzeichnet, dass** der zweite Schritt (E2) in einer Drehung kleiner oder gleich einer halben Umdrehung des Riegels (2) besteht.

3. Verfahren zur Montage oder Entfernung eines Energieversorgungsblocks nach dem vorhergehenden Anspruch, **dadurch gekennzeichnet, dass** der zweite Schritt (E2) durch die Verbindung eines Verbindungsmittels (18) eines Werkzeugs (11) mit einem Verbindungsmittel eines Endes (4) des Riegels (2) erhalten wird.

4. Verfahren zur Montage oder Entfernung eines Energieversorgungsblocks nach einem der vorhergehenden Ansprüche, **dadurch gekennzeichnet, dass** es einen vorherigen Schritt (E0) der Befestigung eines Werkzeugs (11) für den Einsatz des Verfahrens auf mindestens einem entsprechenden Element (7) der Karosserie des Fahrzeugs, der Batterie (1) oder des Riegels (2) umfasst.

5. Verfahren zur Montage oder Entfernung eines Energieversorgungsblocks nach dem vorhergehenden Anspruch, **dadurch gekennzeichnet, dass** der vorherige Schritt (E0) die Verbindung des Werkzeugs (11) mit Hilfe von mindestens zwei Verbindungselementen (7), die symmetrisch um ein Verbindungsmittel (4) des Riegels (2) angeordnet sind, umfasst.

6. Verfahren zur Montage oder Entfernung eines Energieversorgungsblocks nach einem der Ansprüche 4 oder 5, **dadurch gekennzeichnet, dass** der vorherige Schritt (E0) das Einsetzen eines pilzförmigen Elements in eine entsprechende Öffnung (17) umfasst.

7. Verfahren zur Montage oder Entfernung eines Energieversorgungsblocks nach einem der vorhergehenden Ansprüche, **dadurch gekennzeichnet, dass** die Schritte der Betätigung des Riegels (2) automatisch mit Hilfe eines motorisierten Werkzeugs (11) eingesetzt werden.

8. Verfahren zum Austausch eines Energieversorgungsblocks eines Motors für den Antrieb eines Kraftfahrzeugs, **dadurch gekennzeichnet, dass** es ein Verfahren zur Montage oder Entfernung des Energieversorgungsblocks nach einem der vorhergehenden Ansprüche umfasst.

9. System zur Montage oder Entfernung eines Energieversorgungsblocks eines Motors für den Antrieb eines Kraftfahrzeugs, **dadurch gekennzeichnet, dass** es Hardware- und/oder Software-Mittel für den Einsatz des Verfahrens zur Montage oder Entfernung nach einem der Ansprüche 1 bis 7 umfasst.

10. Station zur Montage oder Entfernung eines Energieversorgungsblocks eines Motors für den Antrieb eines Kraftfahrzeugs, **dadurch gekennzeichnet, dass** sie ein System zur Montage oder Entfernung nach dem vorhergehenden Anspruch umfasst.

## Claims

1. Method for mounting or removing a container of energy that powers an engine or motor that propels a motor vehicle, fixed to the motor vehicle using a lock (2) on which a piston (5) acts, **characterized in that** it comprises the following steps:
(E1): disengaging the lock (2) by a pushing action on the piston (5) against the action of an elastic means (6) so as to cause said piston to move translationally with respect to the lock;
(E2): turning the lock (2) about the axis of translational movement of the piston so as to lock or unlock it and lock or unlock the container of energy.

2. Method for mounting or removing a power supply energy container according to Claim 1, **characterized in that** the second step (E2) consists in rotating the lock (2) by half a turn or less.

3. Method for mounting or removing a power supply energy container according to the preceding claim, **characterized in that** the second step (E2) is obtained by associating a connecting means (18) of a tool (11) with a connecting means of one end (4) of the lock (2).

4. Method for mounting or removing a power supply energy container according to one of the preceding claims, **characterized in that** it comprises a prior step (E0) of fixing a tool (11) for implementing the method to at least one corresponding element (7) of the vehicle body shell, of the battery (1) or of the lock (2).

5. Method for mounting or removing a power supply energy container according to the preceding claim, **characterized in that** the prior step (E0) involves connecting the tool (11) via at least two connecting elements (7) which are distributed symmetrically about a connecting means (4) of the lock (2).

6. Method for mounting or removing a power supply energy container according to either of Claims 4 and 5, **characterized in that** the prior step (E0) involves inserting a mushroom-shaped element into a corresponding slot (17).

7. Method for mounting or removing a power supply energy container according to one of the preceding claims, **characterized in that** the steps of actuating the lock (2) are performed automatically using a motorized tool (11).

8. Method for replacing a container of energy that powers an engine or motor that propels a motor vehicle, **characterized in that** it comprises a method for mounting or removing the power supply energy container according to one of the preceding claims.

9. System for mounting or removing a container of energy that powers an engine or motor that propels a motor vehicle, **characterized in that** it comprises hardware and/or software means for implementing the mounting or removal method according to one of Claims 1 to 7.

10. Station for mounting or removing a container of energy that powers an engine or motor that propels a motor vehicle, **characterized in that** it comprises a mounting or removal system according to the preceding claim.
